Europäisches Patentamt

European Patent Office

Office européen des brevets

(19)

(11) Numéro de publication : **0 114 538**
**B1**

(12) **FASCICULE DE BREVET EUROPÉEN**

(45) Date de publication du fascicule du brevet :
**30.11.88**

(51) Int. Cl.⁴ : **B 27 B 21/00**, B 27 B 21/02

(21) Numéro de dépôt : **83402321.0**

(22) Date de dépôt : **02.12.83**

(54) **Support de scie a bûches.**

(30) Priorité : **07.12.82 FR 8220508**

(43) Date de publication de la demande :
**01.08.84 Bulletin 84/31**

(45) Mention de la délivrance du brevet :
**30.11.88 Bulletin 88/48**

(84) Etats contractants désignés :
**AT BE CH DE FR GB IT LI LU NL SE**

(56) Documents cités :
**CH-A- 94 064**
**CH-A- 240 653**
**DE-C- 352 490**
**FR-A- 834 984**
**FR-A- 1 032 869**

(73) Titulaire : **Launier, André**
**43-45 Bld. du Montparnasse**
**F-75006 Paris (FR)**

(72) Inventeur : **Launier, André**
**43-45 Bld. du Montparnasse**
**F-75006 Paris (FR)**

Jouve, 18, rue St-Denis, 75001 Paris, France

## Description

On sait qu'il est souvent plus commode et moins fatigant, pour le sciage des bûches ou éléments analogues, de déplacer la bûche d'un mouvement alternatif, en la tenant à deux mains, devant la lame d'une scie disposée sensiblement verticalement, que d'animer la scie, tenue d'une seule main, d'un mouvement alternatif sensiblement horizontal au-dessus de la bûche placée fixe également horizontalement.

Mais le maintien d'une scie dans une position où sa lame est sensiblement verticale, alors que les deux mains sont occupées, exige l'immobilisation de la scie par le corps de l'ouvrier, c'est-à-dire une posture de celui-ci qui n'est pas naturelle et devient très sensible au bout de peu de temps.

On a déjà proposé ; dans le brevet CH-A-240 653 un étau destiné à saisir un outil, comportant deux plaques qui peuvent se rapprocher par l'action de vis. Un tel étau permet de maintenir solidement une scie en position sensiblement horizontale, mais si l'on veut la maintenir en position sensiblement verticale, le serrage entre les deux plaques s'exerce sur une faible partie du dos de la scie tant la stabilité est mise en jeu.

L'invention vise à fournir un moyen d'immobilisation d'une scie dans la position sensiblement verticale, qui soit pratique, simple, économique et qui assure une parfaite stabilité.

A cet effet, l'invention a pour objet un support comportant une embase portant des moyens de serrage constitués par au moins deux pièces d'appui montées de façon à être rapprochables et deux moyens de rapprochement desdites pièces d'appui, caractérisé par le fait que sur ladite embase sont fixés deux montants parallèles orthogonaux au plan de l'embase et de hauteurs différentes, au voisinage des extrémités libres lesquels sont disposés respectivement lesdits moyens de rapprochement.

Grâce à l'invention, la scie, quelle que soit son inclinaison, et notamment quand elle est en position verticale, est immobilisée par serrage en deux points très écartés l'un de l'autre, puisque ils sont voisins des extrémités des montants et par conséquent immobilisée de façon très stable.

Dans une forme de réalisation particulière, les moyens de serrage sont constitués par deux serre-joints.

Dans une autre forme de réalisation, les moyens de serrage sont constitués par au moins une plaque sensiblement parallèle au plan contenant les deux éléments d'appui des montants, et coopérant avec les montants eux-mêmes ou avec une plaque parallèle fixée sur les montants.

Etant donné que la scie doit être bloquée pour ne pas se déplacer vers l'utilisateur, pendant le travail, sous la pression exercée sur la lame, il est bon, sinon indispensable, de prévoir un organe de butée au niveau de l'extrémité supérieure du montant le plus long.

Cette butée peut, dans la première forme de réalisation, être constituée par un des éléments du serre-joints. Elle peut, dans la seconde forme, être constituée par un boulon de serrage de la plaque.

Dans une forme de réalisation de l'embase, celle-ci est constituée par une plaque comportant une partie centrale évidée. Cette structure permet d'utiliser la scie, sans démonter l'appareil.

Une variante avantageuse de cette forme de réalisation consiste à réaliser l'embase par emploi d'une bande de métal formant un polygone, par exemple un rectangle, les deux montants étant solidaires de deux côtés opposés de ce polygone, par exemple respectivement de deux demi-côtés parallèles de ce rectangle. Dans ce dernier cas, l'ensemble des deux autres moitiés de ces côtés et du côté qui les relie peut être articulé sur la partie restante de l'embase. Cette structure, grâce au rabattement d'une partie sur l'autre facilite encore plus l'utilisation de la soie sans démontage de l'appareil.

Si le support peut être installé da façon permanente alors la base peut être assez épaisse et lourde. Etant fixée au sol, l'utilisateur n'a pas à l'immobiliser par son poids.

A titre nullement limitatif, on a représenté au dessin annexé deux exemples de réalisation de support selon l'invention, dessin sur lequel :

- la figure 1 est une vue en perspective d'un support dont les moyens de serrage sont des serre-joints et

- la figure 2 est une vue en perspective partielle d'un support dont les moyens de serrage sont constitués par deux plaques parallèles.

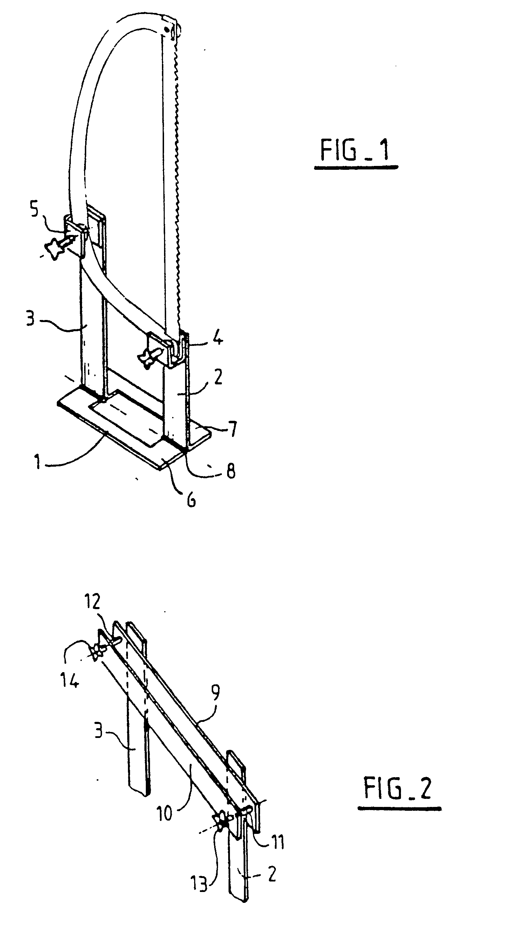

Dans l'exemple de la figure 1, le support comprend une embase 1 sur laquelle sont fixés deux montants 2, 3 parallèles et de hauteurs différentes. A la partie supérieure de chacun des montants est soudé un serre-joint 4, 5. L'âme du serre-joint 4, soudé au montant 2 le plus court, est orientée parallèlement à l'embase 1, alors que l'âme du serre-joint 5, soudé au montant 3 le plus long, est orientée perpendiculairement à cette embase.

Le montage de la scie s'opère de façon très simple en immobilisant dans le serre-joint 4 la partie de la monture où s'est fixée l'extrémité de la lame et, dans le serre-joint 5, la partie de la monture telle que la lame soit sensiblement perpendiculaire, ou très légèrement inclinée, par rapport à l'embase 1, cette dernière partie de monture s'appuyant contre l'âme, formant butée, du serre-joint 5.

Dans cet exemple, l'embase 1 est constituée par une bande métallique en forme de rectangle. Les deux montants 2, 3 sont des portions d'extrémité repliées de la partie de bande 7 et la partie de bande 6 est articulée autour de la charnière 8 à la partie 7 ; la partie 6 est ainsi rabattable sous la partie de bande 7. Grâce à cet agencement, la scie peut, sans être séparée du support, être utilisée avec une « chèvre », si la pièce de bois à manipuler est trop épaisse.

Dans la forme de réalisation de la figure 2, une plaque rectangulaire 9 est soudée à la partie supérieure des deux montants 2, 3 et une plaque identique 10 est montée parallèlement à la première. Les deux plaques sont reliées par deux boulons 11, 12 munis des écrous 13, 14. Le blocage de la scie est assuré par vissage de ces écrous et le boulon 12 sert de butée pour empêcher le basculement de la scie vers l'utilisateur.

**Revendications**

1. Support de scie à bûches du type comprenant une embase portant des moyens de serrage constitués par au moins deux pièces d'appui (4, 5 ; 9, 10) montées de façon à être rapprochables et deux moyens de rapprochement (13, 14) desdites pièces d'appui (9, 10), caractérisé par le fait que sur ladite embase (1) sont fixés deux montants (2, 3) parallèles orthogonaux au plan de l'embase (1) et de hauteurs différentes, au voisinage des extrémités libres desquels sont disposés respectivement lesdits moyens de rapprochement (13, 14).

2. Support selon la revendication 1, sur lequel les moyens de serrage sont constitués par deux serre-joints.

3. Support selon la revendication 1, sur lequel les moyens de serrage comprennent au moins une plaque sensiblement parallèle au plan contenant les deux éléments d'appui des montants.

4. Support selon la revendication 1, sur lequel les moyens de serrage comprennent une plaque fixée à la partie supérieure des montants et une plaque identique parallèle à la précédente.

5. Support selon l'une des revendications 1 à 4, dans lequel l'embase est constituée par une plaque comportant une partie centrale évidée.

6. Support selon la revendication 5, dans lequel l'embase est constituée par une bande de métal formant un polygone, par exemple un rectangle, les deux montants étant solidaires de deux côtés opposés de ce polygone, par exemple respectivement de deux demi-côtés parallèles de ce rectangle.

7. Support selon l'une des revendications 5 et 6 sur lequel l'embase est divisée en deux parties reliées par charnière.

**Claims**

1. A support for a frame saw, comprising a base on which are fixed two parallel uprights at right angles to the base and of different heights, in the vicinity of the free ends of which are disposed, on the same side with respect to the uprights, clamping means comprising at least two bearing pieces mounted so that they may be brought nearer to corresponding bearing elements on the uprights located at the same level.

2. The support of Claim 1, wherein the clamping means are constituted by two clamps.

3. The support of Claim 1, wherein the clamping means are constituted by at least one plate substantially parallel to the plane containing the two bearing elements of the uprights.

4. The support of Claim 1, wherein the clamping means are constituted by a plate fixed on the upper part of the uprights and by an identical plate parallel to the first.

5. The support of Claim 1, wherein the base is constituted by a plate comprising a recessed central part.

6. The support of Claim 5, wherein the base is constituted by a band of metal forming a polygon, for example a rectangle, the two uprights being fast with two opposite sides of this polygon, for example with two parallel halfsides of this rectangle, respectively.

7. The support of Claim 6, wherein the base is divided into two parts connected by a hinge.

**Patentansprüche**

1. Eine Vorrichtung zum Holzscheitsägen des Types, die aus einem Sockel besteht, der die Spannmittel trägt, die zumindest aus zwei Abstützen (4, 5, 9, 10) bestehen, die so montiert sind, dass sie annäherungsfähig sind und aus zwei Spannteilen (13, 14) der genannten Abstützen bestehen, die dadurch gekenntzeichnet sind, dass auf dem beschriebenen Sockel (1) zwei parallele Stuzen (2, 3) rechtwinklig auf der Ebene des Sockels (1) angebracht sind und unterschiedlich hoch sind ; in der Nähe der freien Enden sind beiderseitig die genannten Spannmittel angebracht.

2. Vorrichtung, gemäss Anspruches Nr 1, bei welcher die Spannmittel aus zwei Schraubenzwingen bestehen.

3. Vorrichtung, gemäss Anspruches Nr 1, bei welcher die Spannmittel zumindestens aus einer Platte bestehen, die ziemlich genau parallel zur Fläche ist, die zwei Stützelemente der Stutzen trägt.

4. Vorrichtung, gemäss Anpruches Nr 1, bei welcher die Spannmittel aus einer Platte bestehen, die am oberen Teil der Stutzen befestigt sind, und aus einer identischen Platte, die parallel zu dieser angebracht ist.

5. Vorrichtung, gemäss Anspruches Nr 1-4, bei welcher der Sockel durch eine Platte, bei welcher der zentrale Teil ausgespart ist, gebildet wird.

6. Vorrichtung, gemäss Anspruches Nr 5, bei welcher der Sockel aus einem Metallbandes besteht, das ein Vieleck z. B. ein Recheck ist, wobei die Stutzen fest mit den zwei entgegengesetzten Seiten des Vieleckes verbunden sind, z. B. beiderseits durch die zwei parallelen Halbseiten des Rechteckes.

7. Vorrichtung, gemäss Anspruches Nr 5 und 6, bei welcher der Sockel zweigeteilt ist une durch ein Gelenk verbunden ist.

FIG_1

FIG_2